# FASCICULE DE BREVET EUROPEEN

(11) **EP 0 612 051 B1**
(45) Date de publication et mention de la délivrance du brevet: **22.01.1997**
(21) Numéro de dépôt: 94400275.7
(22) Date de dépôt: 09.02.1994
(51) Int. Cl.: G09F 3/02, B65D 65/00

(54) **Procédé de fabrication d'un manchon-support d'informations, et récipients munis d'un tel manchon**
Herstellungsverfahren für Hülsförmiger-Informationsträger, und Behälters mit einer solchen Hülse
Method for manufacturing a sleeve-shaped-information support, and containers with such sleeve

(30) Priorité: 19.02.1993 FR 9301906
(43) Date de publication de la demande: 24.08.1994
(73) Titulaire: DECOMATIC S.A., F-38290 La Verpillière (FR)
(72) Inventeur: Allegre, André, F-69570 Dardilly (FR)
(74) Mandataire: Bernasconi, Jean

(56) Documents cités:
- WO-A-92/02421
- DE-A- 3 924 790
- FR-A- 1 043 230

## Description

La présente invention a trait aux manchons en matière plastique destinés à être placés autour d'un récipient tel que bidon ou analogue, pour constituer un support d'informations. D'une manière générale, ces manchons sont formés d'un corps fait d'une feuille de matière plastique qui est conformée pour s'adapter sur le pourtour du récipient, par exemple sous forme cylindrique. La présente invention a également trait à un procédé de fabrication de manchons de ce type ainsi qu'aux récipients qui en sont munis.

Les manchons en matière plastique ont l'inconvénient de présenter une surface limitée pour la présentation des informations concernant le produit contenu dans le récipient. Cela est plus particulièrement vrai dans le domaine des produits phytosanitaires, livrés en poudre ou en liquide dans des bidons, où, pour des raisons de législation, les fabricants sont contraints de présenter des indications de plus en plus nombreuses.

Dans le domaine des étiquettes en papier, on connaît des étiquettes munies d'une partie amovible permettant d'augmenter la surface de présentation d'informations.

Ainsi, la demande de brevet internationale WO 92/0241 décrit une étiquette formée d'une feuille de papier refermée sur elle-même par deux de ses bords et se prolongeant par une partie amovible rapportée ou venant d'un seul tenant avec la feuille placée autour du support. A son bord libre, la partie amovible est munie de points de colle à usage unique, tandis qu'à son autre bord, elle peut être munie d'un prédécoupage.

La demande de brevet français n° 1 043 230 décrit aussi une étiquette en papier que l'on fixe autour d'un récipient en collant deux de ses bords l'un à l'autre et qui se prolonge par une partie amovible reliée au reste de l'étiquette par un moyen adhésif à l'un de ses bords et par un prédécoupage à son bord opposé.

Par ailleurs, la demande de brevet allemand n° 3 924 790 décrit une étiquette constituée d'une feuille inférieure destinée à être collée sur le pourtour d'un récipient et d'une feuille supérieure fixée à la précédente par un bord, le bord opposé étant muni d'un adhésif de contact permettant plusieurs décollements.

Dans le domaine des manchons en matière plastique s'est développée l'utilisation de moyens complémentaires d'information du type pochette adhésive, dans laquelle est insérée une notice complémentaire, que le fabricant appose sur le manchon proprement dit, ce qui est relativement coûteux et entraîne des risques d'arrachage de ces pochettes lors du transport et de la manipulation des bidons.

La présente invention a pour objectif de remédier aux inconvénients des manchons en matière plastique de l'art antérieur en fournissant un manchon possédant une surface de présentation d'informations fortement augmentée par rapport aux manchons traditionnels, notamment de l'ordre de 50 à 100 %, voire plus, tout en présentant une bonne sécurité d'utilisation.

Un autre objectif de l'invention est de fournir ce manchon perfectionné dont le coût de revient ne soit pas augmenté de façon significative par rapport aux manchons traditionnels proprement dits.

Un autre objectif encore de l'invention est de fournir un tel manchon qui soit aisé à mettre en oeuvre, notamment à partir d'une seule pièce de matière plastique.

Un autre objectif encore de l'invention est de proposer un procédé simple et rapide de fabrication en continu de ces manchons à partir d'une bobine de film ou de gaine en matière plastique.

L'invention a donc pour objet la réalisation, selon la revendication 1, d'un manchon destiné à être placé autour d'un récipient, tel que bidon ou analogue, pour constituer un support d'informations et formé d'un corps fait d'une feuille en matière plastique qui est conformée pour s'adapter, notamment par étirement ou rétraction, sur le pourtour du récipient et apte à recevoir une impression à son extérieur, le manchon comportant en outre une partie apposée de manière amovible sur le corps de manchon, cette partie amovible étant de grande surface, apte à recevoir ou présenter une impression sur l'une au moins de ses faces et rendue solidaire du corps de manchon par ses deux bords parallèles à la génératrice du corps de manchon, tandis qu'un prédécoupage ou moyen de détachement analogue est prévu sur la partie amovible pour son détachement au voisinage de ses deux bords. Par grande surface, on entend notamment plus de la moitié environ du pourtour du corps de manchon, de préférence la moitié environ. La solidarisation des bords de la partie amovible au corps de manchon est de préférence assurée par soudure.

Ainsi, des indications peuvent être portées sur tout le pourtour du manchon et sur l'une ou les deux faces de la partie amovible, qui, avantageusement, peut être détachée à un seul ou à ses deux bords.

On comprend que ce manchon peut être réalisé aussi bien à partir d'une feuille de matière plastique que d'une gaine ou encore d'un film de matière plastique de grande longueur, quoique cette dernière solution soit industriellement plus appropriée. Par ailleurs, étant donné que les matières plastiques usuellement utilisées pour la fabrication de manchons, nécessitent un traitement de surface particulier, tel que traitement aux effluves électriques à haute fréquence dit traitement corona, pour les rendre aptes à recevoir une impression, et que deux surfaces ainsi traitées ont tendance à se coller l'une contre l'autre en cas de superposition, un mode de réalisation particulier de l'invention prévoit que la partie amovible peut être formée de deux feuilles ou parties de feuille de matière plastique, la face extérieure de chacune d'elles étant apte à recevoir une impression.

De façon préférée, le corps de manchon et la partie amovible sont obtenus à partir d'une même feuille de matière plastique.

L'invention a donc pour objet un procédé de fabrication de manchons destinés à être placés autour d'un récipient tel que bidon ou analogue pour constituer un support d'informations, caractérisé en ce qu'on réalise un corps de manchon conformé pour s'adapter sur le pourtour du récipient à partir d'une feuille de matière plastique et en ce que l'on adjoint au corps de manchon une partie amovible réalisée à partir d'une feuille de matière plastique, que l'on solidarise au corps de manchon par deux bords parallèles à la génératrice de celui-ci par un moyen de solidarisation tel que soudure ou analogue, de telle façon que la partie amovible vienne recouvrir tout ou partie du corps de manchon, et l'on réalise dans la partie amovible un prédécoupage ou un moyen de détachement analogue au voisinage desdits bords pour permettre le détachement de la partie amovible.

De préférence, le corps de manchon et/ou la partie amovible sont réalisés à partir d'une feuille de matière plastique. Si nécessaire, le feuille de matière plastique peut recevoir sur l'une de ses faces un traitement usuel la rendant apte à recevoir une impression, une telle impression étant de préférence réalisée avant la mise en forme du manchon.

Selon un premier mode de réalisation du procédé selon l'invention, le corps de manchon et la partie amovible sont réalisés à partir d'une même feuille de matière plastique divisée longitudinalement en trois parties, une partie centrale entourée de deux parties latérales, procédé dans lequel, par pliage, on rabat une première partie latérale sur la partie centrale, puis la deuxième partie latérale, destinée à former la partie amovible, par dessus la première, en amenant le bord libre de cette deuxième partie au voisinage de la ligne de pliage entre les deux autres parties de feuille, l'on soude ensemble, longitudinalement, les trois parties de feuille au voisinage de chacune des deux lignes de pliage et, au voisinage des soudures ainsi formées, on réalise un prédécoupage dans la partie latérale destinée à former la partie amovible.

On peut envisager différentes variantes du manchon selon l'invention, par exemple en réalisant le corps de manchon et la partie amovible à partir d'une même feuille de matière plastique préalablement pliée en deux, ou d'une gaine de matière plastique, de manière à réaliser une partie amovible formée de deux épaisseurs de feuille. Dans ce cas, le procédé peut prévoir, à partir de la gaine ou des deux épaisseurs de feuille, de réaliser un pliage pour avoir quatre épaisseurs de feuille et des soudures et prédécoupages appropriés de façon à obtenir, à partir de deux épaisseurs de feuille, le corps de manchon proprement dit et, à partir des deux autres épaisseurs de feuille, la partie amovible. On comprend que, suivant la disposition des soudures et prédécoupes, la partie amovible pourra se présenter par exemple sous forme de gaine, sous forme de feuille double à ouvrir ou en deux parties de feuille amovibles.

On préfère que la feuille de matière plastique, avantageusement étirable, soit en polyéthylène et ait reçu, sur sa face destinée à être tournée vers l'extérieur lorsque le manchon est en place sur un récipient, un traitement usuel lui permettant de recevoir une impression, tel qu'un traitement corona.

D'une manière préférée, on fabrique les manchons en continu à partir d'un film préimprimé présenté en bobine, qui peut recevoir un prédécoupage pour la séparation des manchons. On peut aussi travailler à partir d'une gaine ou encore d'un film préalablement plié en deux, dans le sens de la longueur.

L'invention va être maintenant décrite plus en détail à l'aide d'un mode de réalisation du procédé selon l'invention, décrit en liaison avec le dessin. Celui montre :
- à la figure 1, les étapes a) à d) d'un procédé selon l'invention ;
- à la figure 2, une vue partielle de dessus d'une bande comportant plusieurs manchons obtenus par le procédé selon la figure 1 ;
- à la figure 3, une vue en perspective d'un manchon obtenu par le procédé selon la figure 1.

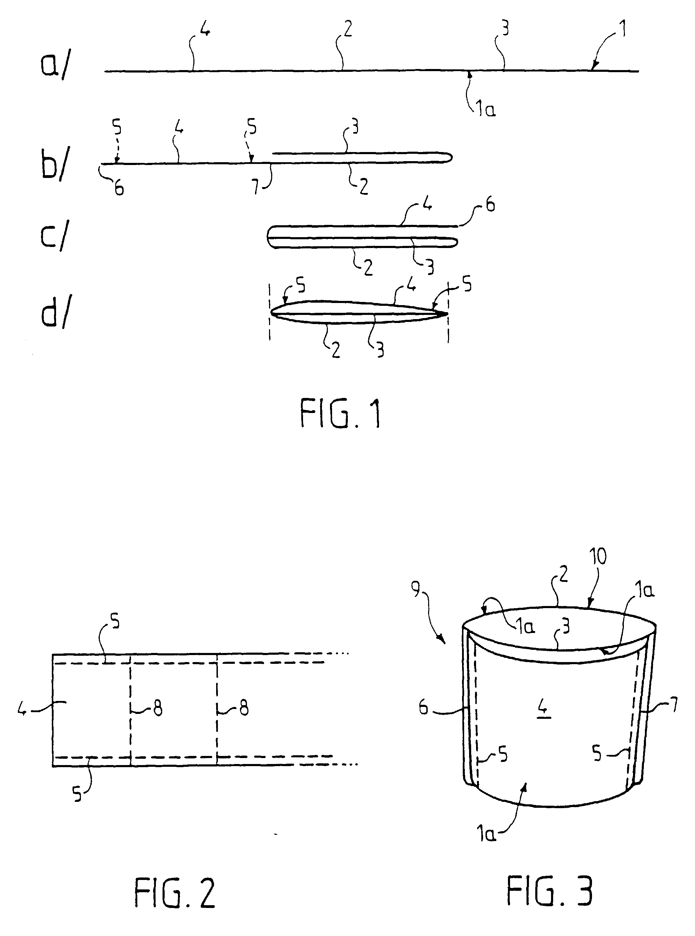

Dans le procédé représenté à la figure 1, on part en a) d'un film de polyéthylène étirable 1 de largeur un peu supérieure à 1,5 fois (sans tenir compte des chutes) le périmètre du bidon auquel le manchon est destiné. La face inférieure la de ce film a été imprimée à l'avance après traitement de surface approprié.

Le procédé est conduit en continu à partir d'une bobine de film préimprimé. Le film 1 se divise longitudinalement en trois parties sensiblement égales, une partie centrale 2 et deux parties latérales 3 et 4.

L'étape b) est une opération de pliage ou dossage amenant la partie latérale 3 au-dessus de la partie centrale 2 avec laquelle elle formera le corps du manchon. Avant ou après cette étape, on réalise deux prédécoupages 5 près des bords longitudinaux 6 et 7 de la partie latérale 4. En c), une deuxième opération de pliage amène la partie latérale 4, destinée à former la partie amovible, au-dessus de la partie latérale 3. On réalise ensuite, en d), la finition et la mise à largeur du manchon par une opération de soudage des trois épaisseurs de film, suivie d'une découpe des rives de soudure (non représentées).

Un prédécoupage 8 est réalisé transversalement à la direction longitudinale du film pour délimiter les manchons entre eux : figure 2. Cette opération peut s'effectuer en continu ou en discontinu.

A la figure 3, on a représenté un manchon 9 obtenu par ce procédé et sur lequel on reconnaît le corps de manchon cylindrique 10 et la partie amovible 4. Si l'on se reporte à nouveau à la figure 1, on comprend que la face inférieure imprimée la du film constitue à présent le pourtour extérieur du manchon et la face extérieure de la partie amovible.

La partie amovible, qui constitue une surface additionnelle, peut être détachée pour accéder aux informations figurant sur le corps du manchon. Elle peut être utilisée comme support d'information complémentaire ou encore par exemple comme bon d'épargne, image à collectionner ou support ludique (puzzle, ...), support d'information à retourner au fabricant (par le vendeur lors de l'acte de vente, ou par le client après l'acte d'achat), etc.

## Revendications

1. Procédé de fabrication de manchons destinés à être placés autour d'un récipient tel que bidon ou analogue pour constituer un support d'informations, caractérisé en ce qu'on réalise un corps de manchon (10) conformé pour s'adapter sur le pourtour du récipient à partir d'une feuille (1) de matière plastique et en ce que l'on adjoint au corps de manchon (10) une partie amovible (4) réalisée également à partir d'une feuille de matière plastique, que l'on solidarise au corps de manchon (10) par deux bords (6,7) parallèles à la génératrice de celui-ci, par un moyen de solidarisation tel que soudure ou analogue, de telle façon que la partie amovible (4) vienne recouvrir tout ou partie du corps de manchon (10), et l'on réalise dans la partie amovible (4) un prédécoupage (5) au voisinage desdits bords (6,7) pour permettre le détachement de la partie amovible (4).

2. Procédé selon la revendication 1, caractérisé en ce que le corps de manchon (10) et la partie amovible (4) sont réalisés à partir d'une même feuille (1) de matière plastique divisée longitudinalement en trois parties, une partie centrale (2) entourée de deux parties latérales (3, 4), en ce que, par pliage, on rabat une première partie latérale (3) sur la partie centrale (2), puis la deuxième partie latérale (4), destinée à former la partie amovible (4), par dessus la première (3), en amenant le bord libre (6) de cette deuxième partie (4) au voisinage de la ligne de pliage entre les deux autres parties de feuille (2, 3), en ce que l'on soude ensemble, longitudinalement, les trois parties de feuille au voisinage de chacune des deux lignes de pliage et en ce que, au voisinage des soudures ainsi formées, on réalise un prédécoupage (5) dans la partie latérale (4) destinée à former la partie amovible.

3. Procédé selon la revendication 1, caractérisé en ce que le corps de manchon et la partie amovible sont réalisés à partir d'une même feuille de matière plastique pliée préalablement en deux, ou d'une gaine de même matière, en ce que l'on réalise un pliage pour avoir quatre épaisseurs de feuille et des soudures et prédécoupages appropriés de façon à obtenir, à partir de deux épaisseurs de feuille, le corps de manchon, et, à partir des deux autres épaisseurs de feuille, la partie amovible sous forme de gaine, de feuille double à ouvrir ou en deux parties de feuille amovibles.

4. Procédé selon l'une des revendications 1 à 3, caractérisé en ce que la feuille est en polyéthylène et a reçu, sur sa face destinée à être tournée vers l'extérieur lorsque le manchon est en place sur un récipient, un traitement lui permettant de recevoir une impression.

5. Procédé selon l'une quelconque des revendications 1 à 4, caractérisé en ce qu'on fabrique les manchons en continu à partir d'une bobine de matière plastique préimprimé.

## Claims

1. Method for the manufacture of sleeves that are to be placed around a container, such as a can or the like, to form an information support, characterised in that a sleeve body (10) which is shaped to fit onto the circumference of the container is produced from a sheet (1) of plastics material, and in that a removable portion (4) likewise produced from a sheet of plastics material is added to the sleeve body (10) and is fixedly joined thereto by two edges (6, 7) parallel to the generator of the sleeve body, by a means of fixed joining, such as welding or the like, in such a manner that the removable portion (4) covers all or part of the sleeve body (10), and a pre-cut (5) is formed in the removable portion (4) in the vicinity of the edges (6, 7) in order to enable the removable portion (4) to be detached.

2. Method according to Claim 1,
characterised in that the sleeve body (10) and the removable portion (4) are produced from the same sheet (1) of plastics material divided longitudinally into three portions, a central portion (2) surrounded by two side portions (3, 4), in that, by folding, a first side portion (3) is turned down onto the central portion (2), then the second side portion (4), which is to form the removable portion (4), is turned down over the first (3) by bringing the free edge (6) of the second portion (4) into the vicinity of the folding line between the other two portions of sheet (2, 3), in that the three sheet portions are welded together longitudinally in the vicinity of each of the two folding lines, and in that, in the vicinity of the welds so formed, a pre-cut (5) is formed in the side portion (4) that is to form the removable portion.

3. Method according to Claim 1,
characterised in that the sleeve body and the removable portion are produced from the same sheet of plastics material previously folded in two, or from a sheath of the same material, in that folding is carried out to provide four thicknesses of sheet and suitable welds and pre-cuts are produced, in order to obtain, from two sheet thicknesses, the sleeve body and, from the other two sheet thicknesses, the removable portion in the form of a sheath, in the form of a double sheet to be opened or in the form of two removable portions of sheet.

4. Method according to any one of Claims 1 to 3, characterised in that the sheet is produced from polyethylene and has undergone, on its face that is to be directed towards the outside when the sleeve is in place on a container, a treatment enabling it to receive print.

5. Method according to any one of Claims 1 to 4, characterised in that the sleeves are manufactured continuously from a roll of preprinted plastics material.

## Patentansprüche

1. Verfahren zur Herstellung von Hülsen, die dazu bestimmt sind, um einen Behälter, wie beispielsweise einen Kanister oder dergleichen, angeordnet zu werden, um einen Informationsträger zu bilden, dadurch gekennzeichnet, daß ein Hülsenkörper (10) erzeugt wird, der aus einer Kunststoff-Folie (1) ausgeführt ist, so daß er sich an den äußeren Umfang des Behälters anpaßt, und daß an den Hülsenkörper (10) ein abnehmbarer Teil (4) angefügt wird, der ebenfalls aus einer Kunststoff-Folie hergestellt ist, die mit dem Hülsenkörper (10) durch zwei Ränder (6, 7), die zu der Erzeugenden desselben parallel sind, durch ein Verbindungsmittel, wie beispielsweise Schweißung oder dergleichen derart verbunden wird, daß der abnehmbare Teil (4) den Hülsenkörper (10) zur Gänze oder teilweise bedeckt, und in dem abnehmbaren Teil (4) ein Voreinschnitt (5) in der Nähe der Ränder (6, 7) durchgeführt wird, um das Loslösen des abnehmbaren Teils (4) zu ermöglichen.

2. Verfahren nach Anspruch 1, dadurch gekennzeichnet, daß der Hülsenkörper (10) und der abnehmbare Teil (4) aus einer selben Kunststoff-Folie (1) hergestellt sind, die längs in drei Teile geteilt ist, einen mittleren Teil (2), der von zwei seitlichen Teilen (3, 4) umgeben ist, daß durch Falten ein erster seitlicher Teil (3) auf den mittleren Teil (2) umgelegt wird, sodann der zweite seitliche Teil (4), der dazu bestimmt ist, den abnehmbaren Teil (4) zu bilden, über den ersten (3) gelegt wird, indem der freie Rand (6) dieses zweiten Teils (4) in die Nähe der Faltlinie zwischen den beiden anderen Folienteilen (2, 3) gebracht wird, daß die drei Folienteile in der Nähe jeder der beiden Faltlinien längs zusammengeschweißt werden und daß in der Nähe der auf diese Weise gebildeten Schweißnähte ein Voreinschnitt (5) in dem seitlichen Teil (4), der dazu bestimmt ist, den abnehmbaren Teil zu bilden, durchgeführt wird.

3. Verfahren nach Anspruch 1, dadurch gekennzeichnet, daß der Hülsenkörper und der abnehmbare Teil aus einer selben Kunststoff-Folie, die vorher in zwei Teile gefaltet wurde, oder aus einem Mantel aus demselben Material hergestellt sind, daß eine Faltung durchgeführt wird, um vier Foliendicken und geeignete Schweißnähte und Voreinschnitte zu erhalten, um aus zwei Foliendicken den Hülsenkörper und aus den zwei anderen Foliendicken den abnehmbaren Teil in Form eines Mantels, einer zu öffnenden Doppelfolie oder in Form von zwei abnehmbaren Folienteilen zu erhalten.

4. Verfahren nach einem der Ansprüche 1 bis 3, dadurch gekennzeichnet, daß die Folie aus Polyethylen besteht und auf ihrer Seite, die dazu bestimmt ist, nach außen gerichtet zu sein, wenn die Hülse auf einem Behälter angeordnet ist, einer Behandlung unterzogen wurde, die es ihr ermöglicht, bedruckt zu werden.

5. Verfahren nach einem der Ansprüche 1 bis 4, dadurch gekennzeichnet, daß die Hülsen kontinuierlich aus einer Spule aus vorbedrucktem Kunststoff hergestellt werden.
